# FASCICULE DE BREVET EUROPEEN

(11) **EP 1 377 155 B1**
(45) Date de publication et mention de la délivrance du brevet: **09.08.2006**
(21) Numéro de dépôt: 00990847.6
(22) Date de dépôt: 29.12.2000
(51) Int. Cl.: A01G 9/10

(54) **ROBOT DE REPIQUAGE DE VEGETAUX**
UMPFLANZUNGSMASCHINE
ROBOT FOR PRICKING OUT PLANTS

(43) Date de publication de la demande: 07.01.2004
(73) Titulaire: Ferrand, Christelle, 75006 Paris (FR)
(72) Inventeur: Ferrand, Claude, 06200 Nice (FR)
(74) Mandataire: Roman, Michel
(86) Numéro de dépôt international: PCT/FR2000/003737
(87) Numéro de publication internationale: WO 2002/052922

(56) Documents cités:
- EP-A- 0 373 872
- EP-A- 0 551 232
- EP-A- 0 931 441
- WO-A-93/19581
- FR-A- 2 682 553
- FR-A- 2 802 386

## Description

La présente invention a pour objet un robot de repiquage de végétaux.

Il concerne d'une façon générale le domaine industriel et commercial des machines horticoles, et est destiné au transfert automatique à grande vitesse de très jeunes végétaux en motte.
Il permet la mécanisation et l'automatisation des manipulations nécessaires pour le repiquage des végétaux en pots ou en bacs dans les installations horticoles de toutes dimensions.

Longtemps traditionnelle, familiale et polyvalente, l'horticulture s'est aujourd'hui fortement spécialisée et industrialisée. Non seulement l'horticulteur cultive souvent une seule plante, mais encore il réduit parfois son activité à un seul stade de la culture : multiplication (jeunes plants) ou élevage (plantes finies).

Les jeunes plants sont généralement obtenus en effectuant les semis dans des plateaux comportant une série d'alvéoles de faibles dimensions contenant chacune un plant avec une motte de terre.
Lorsque les racines et le premier feuillage se sont formés, les plants doivent être transplantés dans des pots ou des bacs pour pouvoir continuer leur croissance.
Cette transplantation est le plus souvent effectuée au moyen d'installations de transfert automatisées de conceptions très variées dans lesquelles les plateaux à alvéoles ou les éléments recevant les plants sont mobiles et se déplacent sur un même plan, ces déplacements pouvant être linéaires ou circulaires.
A titre d'exemple, on peut citer le brevet européen N° EP 551 232 qui décrit une machine de transplantation servant à retirer des plants de plaques à alvéoles pour les repiquer dans dans des mottes contenues dans des plaques comportant des alvéoles plus grandes, cette machine comprent deux trasporteurs disposés parallèlement et faisant avancer les plaques à alvéoles pas à pas, à des cadences identiques mais à des pas différents correspondant à ceux des deux types de plaques, un portique installé transversalement au-dessus des transporteurs est équipé de plusieurs éléments de préhension coulissant déterminés pour extraire une rangée de plants dans une plaque à petites alvéoles et à les transporter dans les grandes alvéoles d'une seconde plaque.

Cette méthode classique, si elle donne de bons résultats, présente l'inconvénient d'engendrer une perte de temps importante. En effet, les distances à parcourir pour alimenter les alvéoles de grande dimension les plus éloignées sont relativement importantes, ce qui entraîne une durée de transfert élevée, ou la nécessité de prévoir des mouvements à accélérations et décélérations.
En outre, les mouvements de l'ensemble des éléments mobiles sont extrêmement complexes et très difficile à régler. Ces caractéristiques entraîne des coûts très élevés de construction et d'exploitation de ce type de machine.

Par ailleurs, le transfert d'une petite motte dans un contenant récepteur plus grand se fait presque toujours avec des systèmes mécaniques tels que lamelles qui s'enfoncent par le dessus à l'intérieur de la motte, en risquant de détériorer le feuillage et les racines, au moment de la préhension du plant et au moment de son repiquage.
Un brevet déposé par l'auteur de la présente demande sous le N° FR 2 682 553 décrit un élément de transfert formé de deux parties pouvant s'écarter l'une de l'autre, cet élément étant associé, d'une part, à un poussoir vertical apte à y introduire par le bas le jeune végétal avec sa motte lorsqu'il est ouvert et, d'autre part, à un éjecteur mécanique chassant vers le bas le végétal dans la zone de plantation en appuyant sur sa motte par l'intermédiaire de tiges dont les extrémités sont pourvues d'un renflement. A l'usage, ce système a révélé un défaut important. Dans leur mouvement vertical du haut vers le bas, les tiges de l'éjecteur, avant d'atteindre la motte, sont amenées à frôler la partie foliaire qui est fréquemment endommagée.

Le dispositif selon la présente invention a pour objectif de remédier à ces inconvénients. Il permet en effet d'obtenir à des cadences très élevées, et sans interventions manuelles, le transfert des jeunes plants à repiquer au moyen de systèmes mécaniques simples, peu onéreux, d'une très grande fiabilité et ne risquant pas d'endommager le feuillage ou les racines des végétaux.

Il est constitué d'un ou plusieurs supports mobiles recevant les plateaux alvéolés contenant les plants à repiquer, d'un ou plusieurs systèmes de transfert et d'un ou plusieurs convoyeurs recevant les pots ou bacs récepteurs et passant au-dessus du ou des supports mobiles, ces derniers étant pilotés de manière à ce que les plants à transférer se trouvent, au moment de l'extraction, le plus près possible du convoyeur, de manière à permettre de rendre la course du système de transfert aussi courte que possible et son trajet toujours identique.

Sur les dessins schématiques annexés, donnés à titre d'exemples non limitatifs de formes de réalisation de l'objet de l'invention:
la figure 1 représente en perspective axonométrique un robot de repiquage avec système de transfert pour pots,
les figures 2 et 3 sont des vues suivant la flèche F1 de la figure 1 montrant deux variantes du système de transfert,
la figure 4 représente en élévation un robot avec système de transfert rotatif,
la figure 5 est une vue axonométrique d'une variante de robot à système de transfert multiple pour le remplissage de bacs récepteurs,
la figure 6 représente un système de repiquage comportant une bande sans fin à palettes destinée à amener les pots récepteurs du transporteur vers le système de transfert et à les ramenere sur le transporteur,
la figure 7 montre en élévation un mécanisme de transfert en forme de gouttière à éjecteur latéral coulissant,
la figure 8 est une coupe transversale agrandie suivant les flèches F2 de la figue 7,
la figure 9 représente, vu de côté, un système de transfert à pince et tiges anti-rotation,
les figures 10 et 11 montrent, vue de dessous, la pince de la figure 9 respectivement ouverte et fermée
et la figure 12 représente une machine de repiquage de repiquage existante avec système convoyeur à chaîne. modifiée suivant les principes de la présente demande.

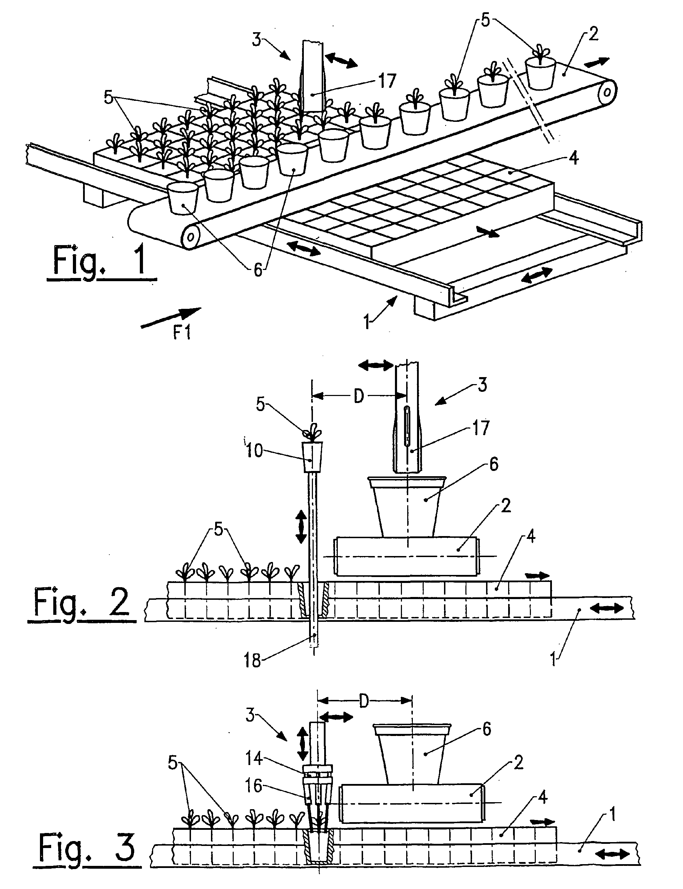

Le dispositif, figures 1 à 3, est constitué d'une machine automatique incluant un support mobile 1, un convoyeur 2 tel que tapis roulant ou transporteur à chaîne et un mécanisme de transfert 3.

Le support mobile 1 est destiné à recevoir les plateaux alvéolés 4 contenant les plants 5 à transférer et se déplace horizontalement suivant deux directions perpendiculaires de manière à constituer une table à mouvements X-Y.

Les éléments récepteurs des plants 5, tels que pots 6 ou bacs 7, sont disposés sur le convoyeur 2 installé au-dessus du support mobile 1 de telle manière que les plateaux alvéolés 4 puissent passer au-dessous de ce convoyeur.
Le but de cette caractéristique essentielle de la présente invention est de rendre aussi faible que possible la distance D à parcourir par le système de transfert 3 entre l'extraction d'un plant 5 et la dépose de ce dernier dans l'élément récepteur 6, 7, en permettant d'amener, à chaque opération de transfert, le ou les plants à extraire à proximité du bord du convoyeur 2, au droit de l'emplacement récepteur où doit être déposé le plant 5.
Cette disposition permet une augmentation de la vitesse de transfert telle qu'il est possible de pratiquer le repiquage "à la volée", c'est-à-dire avec une vitesse constante du convoyeur 2, sans arrêts.
En coordonnant les mouvements du support 1 et du convoyeur 2, on peut rendre le trajet des plants 3 à repiquer toujours identique, ce qui permet de simplifier considérablement le mécanisme d'entraînement de l'outil de transfert 3, ainsi que le système de pilotage.

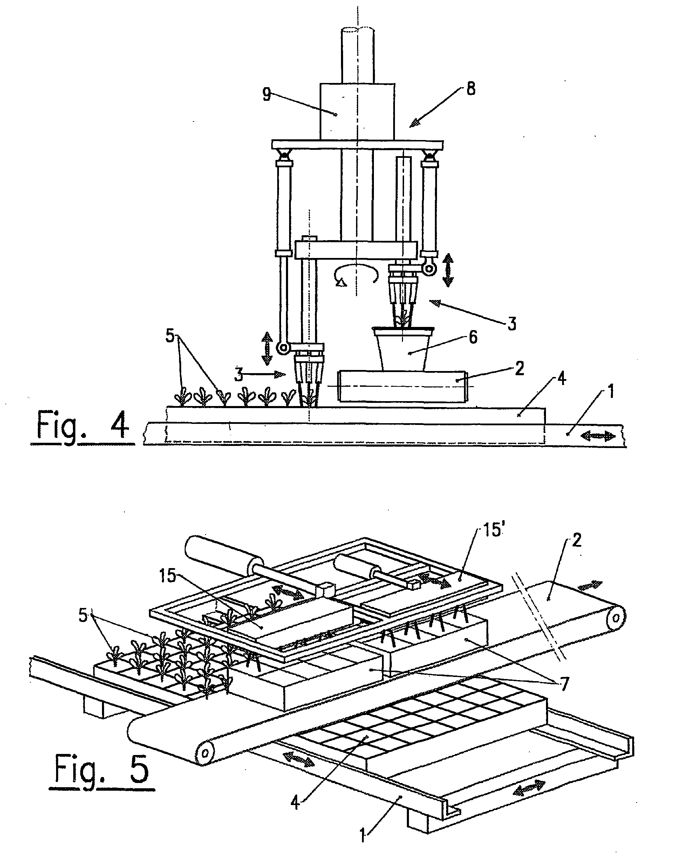

Il est en particulier possible de monter plusieurs systèmes de transfert 3 sur un dispositif rotatif 8 à axe vertical fixe comportant deux bras ou plus et actionné par un moteur 9 hydraulique, pneumatique ou électrique (figure 4).

Pour repiquer des jeunes plants 5 avec leur motte 10 dans des récepteurs, tels que bacs 7 dont les éléments sont disposées en quinconce, il suffira de placer face à face, de part et d'autre du convoyeur 2, deux systèmes de transfert 3 simples ou multiples.

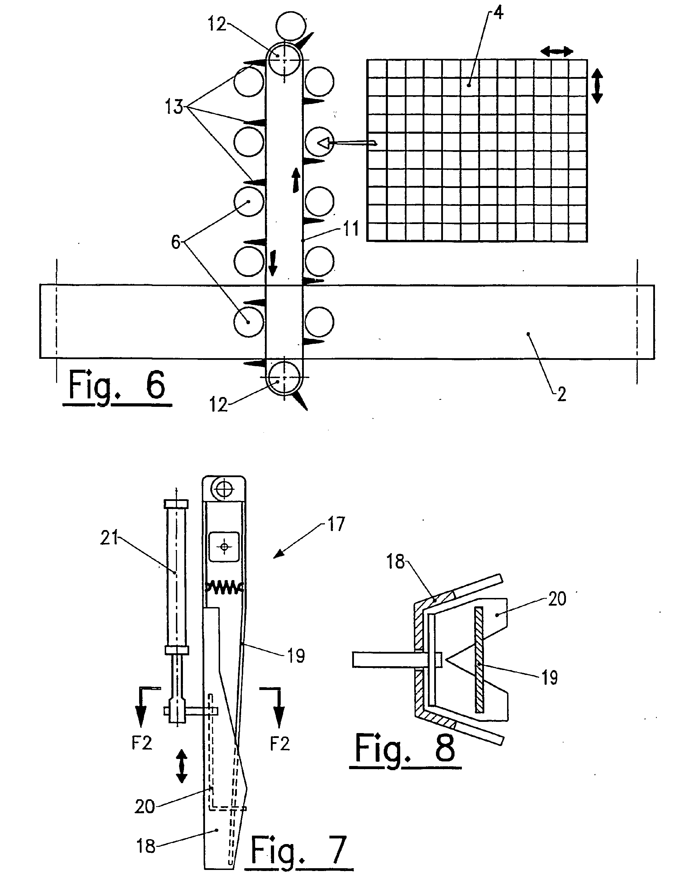

Les pots récepteurs 6 pourront être amenés du convoyeur 2 vers la zone fixe de repiquage, et ramenés audit tapis, au moyen d'un dispositif constitué d'une bande sans fin 11 passant sur deux galets 12 à axes verticaux et garnie d'une rangée de palettes 13 régulièrement espacées (figure 6).

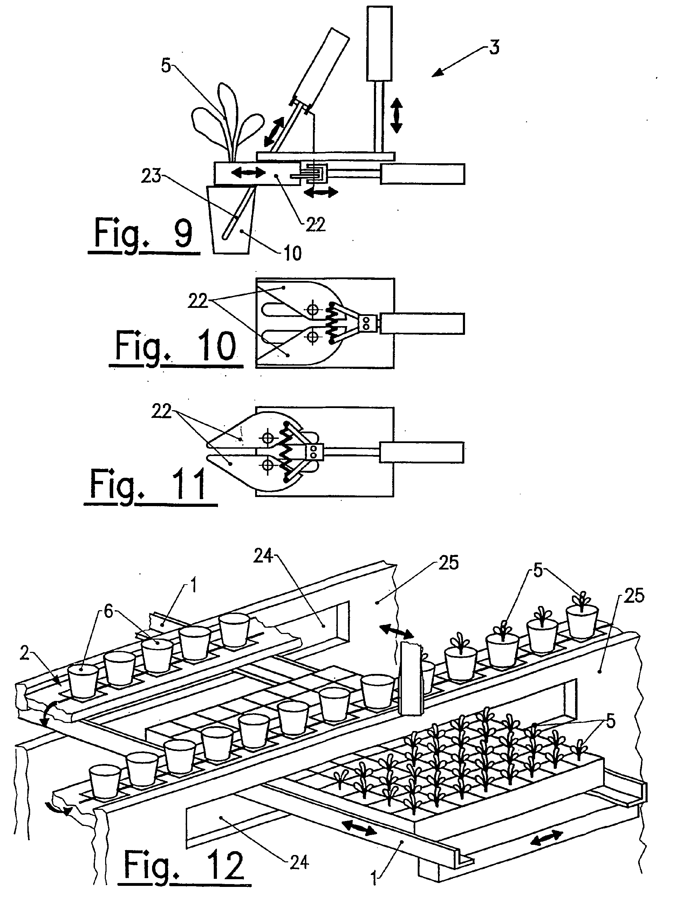

Le système de transfert 3 peut être constitué d'une "pince" simple 14 (figure 3) ou multiple 15 (figure 5) pourvue de doigts inclinés 16 agencés pour passer autour du feuillageiet s'enfoncer dans la motte 10 de façon à maintenir cette dernière durant le déplacement.
Le système de transfert peut aussi consister en un élément positionneur ouvrant 17 associé à un poussoir vertical 18 traversant le fond du plateau alvéolé 4 et apte à introduire de bas en haut le plant 5 avec sa motte 10 dans ledit élément positionneur, ce dernier comportant un éjecteur destiné à chasser de haut en bas le plant vers l'emplacement de repiquage 6, 7, la méthode consistant à introduire directement par le bas et par poussée directe la motte 10 contenant le végétal 5 à l'intérieur de l'élément positionneur ouvrant.
Le passage interne de l'élément positionneur 17 aura avantageusement la forme d'une gouttière 18 en "U" fermée par une partie articulée 19 agencée de manière à appuyer grâce à un ressort sur le plant 5 pour l'immobiliser après qu'il ait été introduit à l'intérieur du positionneur. Un moyen adéquat, tel que arbre de section carrée, vérin ou came, assure l'écartement de la partie articulée 19 lors de l'introduction du végétal. Durant la phase de repiquage du plant 5, ce dernier est chassé vers la zone de réception au moyen d'un éjecteur 20 latéral coulissant le long de la gouttière 18 (et non le long de la partie articulée comme sur les réalisations connues) grâce à un vérin 21 ou tout autre mécanisme similaire.
Le système de transfert représenté sur les figures 9, 10 et 11 est constitué par la combinaison de plusieurs éléments mécaniques pneumatiques ou hydrauliques en mouvement. La préhension du plant 5 se fait à l'aide d'une pince coulissante 22 qui saisit le végétal au-dessus de la motte 10 par le collet ou la partie foliaire. La motte est stabilisée en position verticale au moyen d'une ou plusieurs tiges 23 inclinées rétractables s'enfonçant dans la motte de manière à permettre une extraction aisée du plant ainsi que son maintien en position verticale durant la phase de transfert avant l'opération de repiquage à l'intérieur de l'élément récepteur 6, 7.

Le principe de l'invention peut être appliqué à des machine de repiquage de type classique existante ou non en prévoyant des ouvertures 24 sous le convoyeur 2, dans la partie externe du bâti 25 de la machine, de façon à permettre le passage d'un ou plusieurs supports mobiles 1 (figure 12).

Le positionnement des divers éléments constitutifs donne à l'objet de l'invention un maximum d'effets utiles qui n'avaient pas été, à ce jour, obtenus par des dispositifs similaires.

## Revendications

1. Robot de repiquage de végétaux, destiné au transfert automatique à grande vitesse de très jeunes végétaux en motte et permettant la mécanisation et l'automatisation des manipulations nécessaires pour le repiquage des végétaux en pots ou en bacs dans les installations horticoles de toutes dimensions, constitué par la combinaison d'au moins un support mobile (1) recevant les plateaux alvéolés (4) contenant les plants (5) à repiquer, d'au moins un système de transfert (3) et d'au moins un convoyeur (2) recevant les pots (6) ou bacs (7) récepteurs,
**caractérisé en ce que** le convoyeur (2) est disposé au-dessus du support mobile (1), ce dernier se déplaçant horizontalement sous ledit convoyeur suivant deux directions perpendiculaires de manière à constituer une table à mouvements X-Y et étant piloté de manière à ce que les plants (5) à transférer se trouvent, au moment de l'extraction, le plus près possible du convoyeur (2), de façon à rendre la course du système de transfert (3) la plus courte possible en amenant, à chaque opération de transfert, les plants (5) à extraire à proximité du bord du tapis transporteur (2), au droit de l'emplacement récepteur où doivent être déposé lesdits plants.

2. Robot de repiquage selon la revendication 1, **se caractérisant par le fait que** les mouvements des éléments mobiles sont coordonnés de manière à ce que le trajet des plants (5) à repiquer soit toujours identique.

3. Robot de repiquage selon la revendication 2, **se caractérisant par le fait que** plusieurs systèmes de transfert (3) sont montés sur un dispositif rotatif (8) à axe vertical fixe comportant deux bras ou plus.

4. Robot de repiquage selon l'une quelconque des revendications 2 et 3, **se caractérisant par le fait que** les pots récepteurs (6) sont amenés du convoyeur (2) vers la zone fixe de repiquage, et ramenés audit tapis, au moyen d'un dispositif constitué d'une bande sans fin (11) passant sur des galets (12) à axes verticaux et garnie d'une rangée de palettes (13) régulièrement espacées.

5. Robot de repiquage selon l'une quelconque des revendications précédentes, **se caractérisant par le fait que** le système de transfert (3) est constitué d'une "pince" simple (14) ou d'une pince multiple (15) pourvue de doigts inclinés (16) agencés pour passer autour du feuillage du plant (5) et s'enfoncer dans la motte (10) de façon à maintenir cette dernière durant le transfert.

6. Robot de repiquage selon l'une quelconque des revendications
1 à 4, **se caractérisant par le fait que** le système de transfert (3) est constitué d'un élément positionneur ouvrant (17) associé à un poussoir vertical (18) traversant le fond des plateaux alvéolés (4) et apte à introduire de bas en haut le plant (5) avec sa motte (10) dans ledit élément positionneur.

7. Robot de repiquage selon la revendication 6, **se caractérisant par le fait que** le passage interne de l'élément positionneur (17) est formé d'une gouttière (18) en "U" fermée par une partie articulée (19) agencée de manière à appuyer sur Ila motte du plant (5) pour l'immobiliser après qu'il ait été introduit à l'intérieur du positionneur, un moyen adéquat, tel que arbre de section carrée, vérin ou came, assurant l'écartement de la partie articulée (19) lors de l'introduction du plant (5).

8. Robot de repiquage selon l'une quelconque des revendications 6 et 7, **se caractérisant par le fait que** l'élément positionneur (17) comporte un éjecteur (20) destiné à chasser de haut en bas le plant vers l'emplacement de repiquage (6, 7).

9. Robot de repiquage selon la revendication 8, **se caractérisant par le fait que** l'éjecteur (20) coulisse latéralement le long de la gouttière (18) grâce à un vérin (21) ou tout autre mécanisme similaire.

10. Robot de repiquage selon l'une quelconque des revendications 1 à 4, **se caractérisant par le fait que** le système de transfert (3) est constitué par la combinaison d'une pince coulissante (22) apte à saisir le plant (5) au-dessus de la motte (10) par le collet ou la partie foliaire, et d'une ou plusieurs tige(s) 23 inclinée(s) rétractables s'enfonçant dans la motte de manière à permettre une extraction aisée du plant (5) ainsi que son maintien en position verticale durant la phase de transfert avant l'opération de repiquage à l'intérieur de l'élément récepteur (6, 7).

11. Robot de repiquage selon l'une quelconque des revendications précédentes, **se caractérisant par le fait que** la partie externe du bâti (25) comporte, au-dessous du convoyeur (2) des ouvertures (24) permettant le passage d'un ou plusieurs supports mobiles (1).

12. Robot de repiquage selon la revendication 11, **se caractérisant par le fait qu'**il est constitué d'une machine de repiquage existante dans la partie externe du bâti (25) de laquelle on a pratiqué des ouvertures (24), au-dessous du convoyeur (2), permettantile passage d'un ou plusieurs supports mobiles (1).

13. Robot de repiquage selon la revendication 11, **se caractérisant par le fait que** le repiquage est pratiqué "à la volée", c'est-à-dire avec une vitesse constante du convoyeur 2, sans arrêts.

## Claims

1. Robot used to transplant seedlings, designed for automatic high speed moving of very young plants with their root ball, and allowing the mechanised and automated handling operations involved in replanting into pots or containers in horticultural facilities of all dimensions, consisting of the combination of at least one mobile support (1) receiving cell trays (4) containing the seedlings (5) to be transplanted, and at least one transfer system (3) and at least one conveyor (2) carrying the destination pots (6) or trays (7),
**characterized in that** conveyor (2) is arranged above mobile support (1), the latter moving horizontally under the aforementioned conveyor in two perpendicular directions so as to constitute a table with X-Y movements and operated so that seedlings (5) to be transplanted are, at the time of extraction, as close as possible to conveyor (2), so as to ensure that the travel of transfer system (3) is as short as possible by bringing seedlings (5) to be extracted on each transfer operation close to the edge of conveyor belt (2) at the destination location where the said seedlings are to be set down.

2. Robot for transplanting seedlings according to claim 1, **characterized in that** the movements of the various components are coordinated so that seedlings (5) always follow an identical route.

3. Robot for transplanting seedlings according to claim 2, **characterized in that** several transfer systems (3) are assembled on a rotary device (8) with fixed vertical axis and comprising two or more arms.

4. Robot for transplanting seedlings according to any of claims 2 and 3, **characterized in that** destination pots (6) are taken from conveyor (2) to the fixed replanting zone, and brought back to the said conveyor belt by means consisting of an endless belt (11) passing over rollers (12) with vertical axes and equipped with a row of evenly spaced slats (13).

5. Robot for transplanting seedlings according of any of the aforesaid claims,
**characterized in that** transfer system (3) consists of a simple "gripping mechanism" (14) or multiple "gripping mechanisms" (15) equipped with inclined fingers (16) arranged to pass around the foliage of seedlings (5) and insert into root ball (10) in order to hold the latter during transfer.

6. Robot for transplanting seedlings according to any of claims 1 to 4, **characterized in that** transfer system (3) consists of a positioning device (17) which opens, with a vertical pusher (18) passing through the bottom of cell tray (4) to introduce seedlings (5) with its root ball (10) upwards into the aforementioned positioning element.

7. Robot for transplanting seedlings according to claim 6 **characterized in that** the internal passage of positioning device (17) is formed of a gutter (18) with channel section closed by an articulated part (19) arranged so as to press on the root ball of plant (5) in order to immobilise it after it has been introduced inside the positioner, with appropriate means such as square section shaft, cylinder or cam, ensuring the spacing of articulated pan (19) when introducing seedling (5).

8. Robot for transplanting seedlings according to any of claims 6 and 7 **characterized in that** positioning device (17) consists of an ejector (20) designed to drive the seedlings down towards the destination element (6, 7).

9. Robot for transplanting seedlings according to claim 8, **characterized in that** ejector (20) slides laterally along gutter (18) through the action of cylinder (21) or any other similar mechanism.

10. Robot for transplanting seedlings according to any of claims 1 to 4 **characterized in that** transfer system (3) consists of a combination of a sliding gripping mechanism (22) that is able to grasp seedling (5) above root ball (10) at the collar or the foliar part, and of one or more retractable inclined rods (23) which insert into the root ball so as to easily extract seedling (5) as well as hold it in a vertical position during the transfer phase before planting inside the destination element (6, 7).

11. Robot for transplanting seedlings according to any of the said claims, **characterized in that** the external part of frame (25) is equipped with openings (24) below conveyor (2) to allow the passage of one or more mobile supports (1).

12. Robot for transplanting seedlings according to claim 11, **characterized in that** it consists of a transplanting machine which already exists in the external part of frame (25) in which openings (24) have been made below conveyor (2) to allow the passage of one or more mobile supports (1).

13. Robot for transplanting seedlings according to claim 11, **characterized in that** transplanting takes place in "runs", that is to say with a constant speed conveyor 2, without stops.

## Patentansprüche

1. Versetzroboter für Pflanzen, bestimmt zum automatischen Transfer mit hoher Geschwindigkeit sehr junger Pflanzen mit Wurzelballen und zur Mechanisierung oder Automatisierung des Umsetzens von Pflanzen in Töpfe oder Kästen in Gärtnereianlagen aller Größen, bestehend aus der Kombination mindestens eines verfahrbaren Untergestells (1), in das die Wabenplatten (4) mit den umzusetzenden Pflanzen (5) eingesetzt werden, mit mindestens einem Transfersystem (3) und mindestens einem Förderer (2) für die zur Aufnahme bestimmten Töpfe (6) oder Kästen (7),
**gekennzeichnet dadurch, dass** der Förderer (2) über dem verfahrbaren Untergestell (1) angeordnet ist, dass das letztere horizontal unter dem Förderer in zwei senkrecht zu diesem stehende Richtungen verfahren wird, so dass sich ein Kreuztisch bildet, welcher so gesteuert wird, dass die umzusetzenden Pflanzen (5) sich im Moment des Ausziehens so nahe wie möglich am Förderer (2) befinden, der vom Transfersystem (3) zurückzulegende Weg so kurz wie möglich ist und die auszuziehenden Pflanzen (5) bei jedem Transfervorgang in die Nähe des Transportbandes des Förderers (2), genau vor das Aufnahmegefäss in das die Pflanzen eingesetzt werden, zu bringen.

2. Versetzroboter gemäss Anspruch 1, **gekennzeichnet dadurch, dass** die Bewegungen der beweglichen Elemente so koordiniert sind, dass der von den Pflanzen (5) zurückzulegende Weg immer gleich ist.

3. Versetzroboter gemäss Anspruch 2, **gekennzeichnet dadurch, dass** mehrere Transfersysteme (3) auf einer Rotationscinrichtung (8) mit einer senkrechten, nicht beweglichen Achse mit zwei oder mehr Armen montiert sind.

4. Versetzroboter gemäss einem der Ansprüche 2 oder 3, **gekennzeichnet dadurch, dass** die Aufnahmetöpfe (6) vom Förderer (2) in den feststehenden Versetzbereich gebracht und mit einer Einrichtung, die aus einem Endlosband (11), das über senkrechte Rollen läuft und mit einer Reihe in regelmäßigen Abständen angeordneten Paletten (13) versehen ist, besteht, auf das Förderband zurückgebracht werden.

5. Versetzroboter gemäss einem der vorstehenden Ansprüche, **gekennzeichnet dadurch, dass** das Transfersystem (3) aus einer einfachen Zange (14) oder einer verstellbaren Zange (15) mit geneigten Backen (16) besteht, die so angeordnet sind, dass sie um das Blattwerk der Pflanze herum in de Wurzelballen (10) greifen, um diesen beim Umsetzen festzuhalten.

6. Versetzroboter gemäss einem der Ansprüche 1 bis 4, **gekennzeichnet dadurch, dass** das Transfersystem (3) aus einem öffnenden Positionierelement (17) besteht, das mit einem senkrechten Stößel (18) zusammenwirkt, um den Boden der Wabenplatten (4) zu durchfahren und die Pflanze (5) mit ihrem Wurzelballen (10) von unten nach oben in das Positionierelement (10) einzusetzen.

7. Versetzroboter gemäss Anspruch 6, **gekennzeichnet dadurch, dass** die interne Öffnung des Positionierelements (17) aus einer U-förmigen Rinne (18) besteht, die von einem drehbar gelagerten Teil (9) geschlossen wird, das so angeordnet ist, dass es auf den Wurzelballen der Pflanze (5) drückt, um diesen festzuhalten, nachdem er in das Positionierelement eingeführt worden ist, sowie aus einem geeigneten Mittel, zum Beispiel einer Vierkantwelle, einem Stellzylinder oder einer Nocke, um den Abstand zwischen dem drehbar gelagerten Teil (19) beim Einsetzen der Pflanze (5). einzuhalten.

8. Versetzroboter gemäss einem der Ansprüche 6 oder 7, **gekennzeichnet dadurch, dass** das Positionierelement (17) einen Ausstoßer (20) besitzt, der die Pflanze von oben nach unten in das Aufnahmegefäß (6, 7) einsetzt.

9. Versetzroboter gemäss Anspruch 8, **gekennzeichnet dadurch, dass** der Ausstoßer (20) mit einem Stellantrieb (21) oder einem ähnlichen Mechanismus an der Rinne (18) entlang gleitend geführt werden kann.

10. Versetzroboter gemäss einem der Ansprüche 1 bis 4, **gekennzeichnet dadurch, dass** das Transfersystem (3) aus der Kombination einer gleitenden Zange (22), welche die Pflanze (5) über dem Wurzelhallen (10) am Wurzelkopf oder am Blattwerk greift, mit einer oder mehrerer Reihen geneigter, einfahrbarer Stäbe (23), besteht, die in den Wurzelballen eingreifen, so dass die Pflanze (5) leicht herausgezogen und während des Transfers vor dem Einsetzen in das Aufnahmegefäß (6, 7) in senkrechter Stellung gehalten werden kann.

11. Versetzroboter gemäss einem der vorstehenden Ansprüche, **gekennzeichnet dadurch, dass** der äußere Teil des Gestells (25) über dem Förderer (2) Öffnungen (24) für das Passieren eines oder mehrerer verfahrbarer Untergestelle (1) besitzt.

12. Versetzroboter gemäss Anspruch 11, **gekennzeichnet dadurch, dass** er aus einer, im äußeren Teil des Gestells (25) vorhandenen Versetzmaschine besteht, in dem oberhalb des Förderers (2) Öffnungen (24) eingebracht wurden, um das Passieren eines oder mehrerer verfahrbarer Untergestelle (1) zu ermöglichen.

13. Versetzroboter gemäss Anspruch 11, **gekennzeichnet dadurch, dass** das Versetzen "fliegend" erfolgt, das heißt ohne Stillstand, mit konstanter Geschwindigkeit des Förderers (2).
